**Europäisches Patentamt**

**European Patent Office**

**Office européen des brevets**

(11) Veröffentlichungsnummer: **0 194 455**

**A2**

(12) **EUROPÄISCHE PATENTANMELDUNG**

(21) Anmeldenummer: **86101776.2**

(22) Anmeldetag: **12.02.86**

(51) Int. Cl.⁴: **B 65 G 57/24**

(30) Priorität: **15.03.85 DE 3509280**

(43) Veröffentlichungstag der Anmeldung:
**17.09.86 Patentblatt 86/38**

(84) Benannte Vertragsstaaten:
**BE DE FR GB IT NL SE**

(71) Anmelder: **Kolbus GmbH & Co. KG**
**Osnabrücker Strasse 77**
**D-4993 Rahden(DE)**

(71) Anmelder: **Leifeld & Lemke Maschinenfabrik GmbH & Co. KG**
**Osnabrücker Strasse 77**
**D-4993 Rahden(DE)**

(72) Erfinder: **Blidschun, Benno**
**Krokusweg 7**
**D-4900 Herford(DE)**

(54) **Palettieranlage.**

(57) In einer Palettieranlage zum lagenweisen Abstapeln von aus Produktionslinien zugeführten, zu einer Packlage zusammengesetzten Packungen unterschiedlicher Produktsorten auf Paletten an jeweils zugeordneten Palettenbeladeplätzen, mit einer Lagenvorpalettiereinrichtung, mit einer dieser nachgeordneten, die Packlagen übernehmenden und nach einem vorwählbaren Programmablauf zu ihren jeweiligen Beladeplätzen transportierenden Palettiermaschine und mit einem an den Palettenbeladeplätzen entlang verfahrbaren Verteilerwagen zur Übernahme und zum Abtransportieren der Vollgutpaletten zu einer Abgabestelle wird die Funktion des Verteilerwagens von einer Palettiermaschine (2) übernommen. Diese besitzt eine Palettentransportbahn (12) auf bodennahem Niveau und ist zum Abtransport der Vollgutpaletten zwischen Übernahmestellen vor den Palettenbeladeplätzen (5) und einer Abgabestelle (13) programmgesteuert verfahrbar.

FIG. 1

## Palettieranlage

Die Erfindung betrifft eine Palettieranlage zum lagenweisen Abstapeln von aus Produktionslinien zugeführten, zu einer Packlage zusammengesetzten Packungen unterschiedlicher Produktsorten auf Paletten an jeweils zugeordneten Palettenbeladeplätzen, mit einer Lagenvorpalettiereinrichtung, mit einer dieser nachgeordneten, die Packlagen übernehmenden und nach einem vorwählbaren Programmablauf zu ihren jeweiligen Beladeplätzen transportierenden Palettiermaschine und mit einem an den Palettenbeladeplätzen entlang verfahrbaren Verteilerwagen zur Obernahme und zum Abtransportieren der Vollgutpaletten zu einer Abgabestelle.

Zum lagenweisen Palettieren von aus Produktionslinien herausgeführten Packungen unterschiedlicher Produktsorten auf jeweils zugeordneten Palettenstellplätzen kommen Palettieranlagen mit einer verfahrbaren Palettiermaschine, mit festen Palettenstellplätzen sowie mit einem Verteilerwagen zum Einsatz. Dieser wird an den Beladeplätzen entlang verfahren, um Vollgutpaletten zu übernehmen und diese zu einer Vollgutabnahmestelle oder Verteilerstelle zu verbringen. Der Verteilerwagen übernimmt zusätzlich die Aufgabe, aus einem Magazin zugeführte Paletten den Palettenbeladeplätzen zuzuführen.

Palettieranlagen der vorab geschilderten Bauweise beanspruchen einen erheblichen Platzbedarf und baulichen Aufwand, bedingt durch das den Palettenbeladeplätzen nachgeordnete Verteilersystem, bestehend aus einem Verteilerwagen mit entsprechenden Laufbahnen.
Aufgabe der Erfindung ist, bei Palettieranlagen der genannten Gattung den Platzbedarf sowie den baulichen Aufwand wesentlich zu
reduzieren. Die Aufgabe wird gelöst durch eine die Funktion des
Verteilerwagens übernehmende Palettiermaschine mit einer auf bodennahem Niveau angeordneten Palettentransportbahn, wobei die Palettiermaschine zum Abtransport der Vollgutpaletten zwischen Übernahmestellen vor den Palettenbeladeplätzen und einer Abgabestelle
programmgesteuert verfahrbar ist. Dabei dient die Palettiermaschine zusätzlich als Transportmittel zum programmgesteuerten Verteilen von Leerpaletten an die Palettenbeladeplätze, wobei die Leerpaletten aus einem Magazin über eine der Palettentransportbahn in
der Palettiermaschine vorgeordnete Förderbahn zuführbar sind. Nach
einem weiteren Merkmal der Erfindung schließt sich die Abgabestelle für die Vollgutpaletten unmittelbar an die Lagenvorpalettiereinrichtung an. Letztlich sind gemäß einer bevorzugten Ausführung
die Palettenbeladeplätze beidseitig der Palettiermaschine und zu
dieser im rechten Winkel installiert.

In der Zeichnung wird nachfolgend ein Ausführungsbeispiel der Erfindung schematisch dargestellt. Es zeigen:

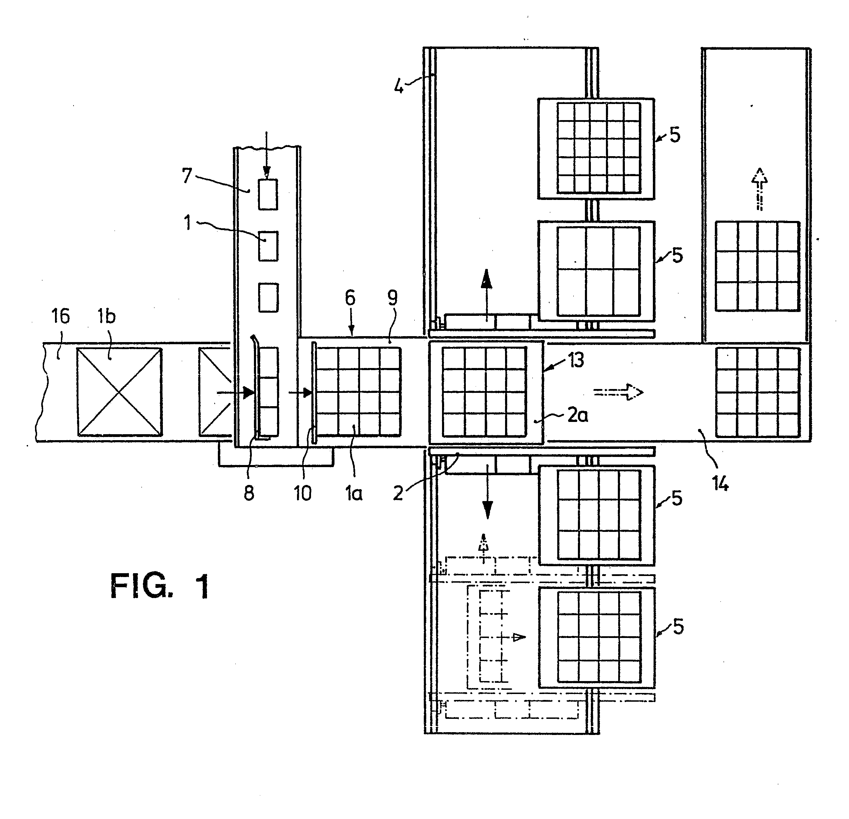

Fig. 1    die erfindungsgemäße Palettieranlage im Grundriß;

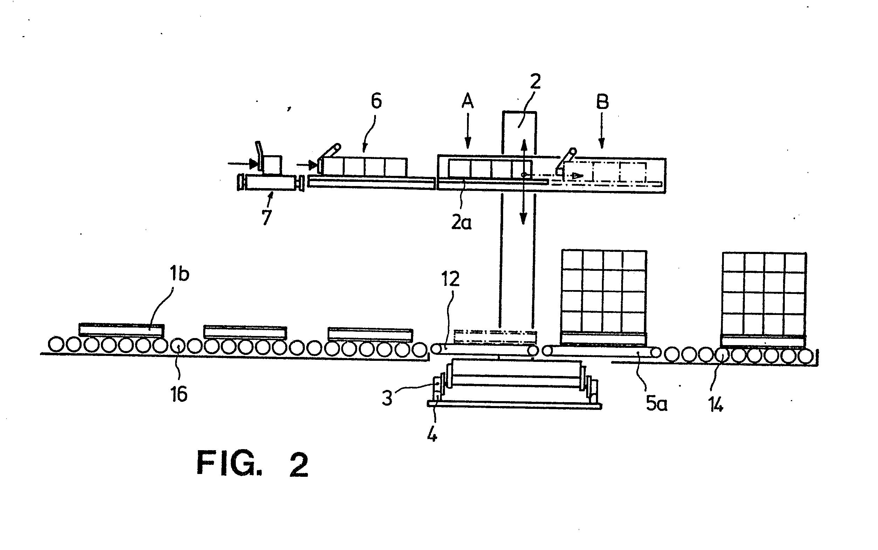

Fig. 2    eine Seitenansicht.

In einer Palettieranlage zum lagenweisen Palettieren von aus mehreren Produktionslinien austretenden Packungen unterschiedlicher
Produktsorten findet eine Palettiermaschine 2 Verwendung, die über
Laufrollen 3 auf Schienen 4 an im rechten Winkel zu der Palettiermaschine sowie auf beiden Seiten zu dieser installierten Palettenbeladeplätzen 5 entlang verfahrbar ist. Als Palettiermaschine
dient ein an sich bekannter universell einsetzbarer Palettierer
mit Abschubtisch, dem eine Lagenvorpalettiereinrichtung 6 vorgeordnet ist.

- 3 -    **0194455**

Die auf Paletten 1b abzustapelnden Packungen 1 gelangen in einer hochliegenden Transportebene von den Produktionslinien kommend über zwischengeschaltete Pufferstrecken und über eine Zuteileinrichtung auf eine Einlaufbahn 7 und werden von dort mittels eines Querschiebers 8 reihenweise auf einen Auflagetisch 9 der Lagenvorpalettiereinrichtung 6 verbracht und zu einer Packlage 1a zusammengestellt. Über nicht gezeigte Einrichtungen läßt sich die Formation der Packlage, ausgerichtet auf die spezifischen Belange der Packgüter, variieren.

Im weiteren Verlauf transportiert ein Überschieber 10 nach Abruf durch die Palettiermaschine die Packlage 1a vom Auflagetisch 9 auf den sich in der Lagenbereitstellungsstation A der Palettiermaschine 2 befindenden Abschubtisch 2a.

Nach einem vorwählbaren Programmablauf verfährt die Palettiermaschine 2 die Packlagen 1a unterschiedlicher Packsorten nacheinander zu den ihnen zugeordneten Palettenbeladeplätzen 5, um sie nach Vorfahren des Abschubtisches 2a in die Beladestation B und nachfolgendem Absenken auf das entsprechende Niveau des Stapels durch Wegziehen des Abschubtisches 2a unter der Packlage 1a auf der Stapelstelle abzusetzen.

Erfindungsgemäß übernimmt die Palettiermaschine 2 die Aufgabe eines Verteilerwagens und ist hierzu mit einer umlaufend antreibbaren Palettentransportbahn 12 auf bodennahem Niveau unterhalb der Lagenbereitstellungsstation A ausgestattet.

Die Palettenbeladeplätze 5 sind ebenso als umlaufend antreibbare Ausfuhrförderer 5a ausgebildet und befinden sich niveaukonstant zur Palettentransportbahn 12 der Palettiermaschine 2, auf die nun die fertig beladenen Paletten überführt werden, nachdem der Abschubtisch 2a wieder seine obere Endstellung eingenommen hat. Nach Übernahme der Vollgutpalette verfährt die Palettiermaschine 2 diese zu einer zentralen, sich an die Lagenvorpalettiereinrichtung 6 anschließende Abgabestelle 13, wo die Vollgutpaletten über die angetriebene Transportbahn 12 auf eine sich an diese anschließende Rollenförderbahn 14 überführt und ausgeschleust werden. Mit Ausfuhr der Vollgutpalette aus der Palettiermaschine 2 wird gleichzeitig eine zusammengestellte Packlage 1a vom Auflagetisch 9 auf den sich in der Lagenbereitstellungsstation A befindenden Abschubtisch 2a zugeführt.

Durch die hier gewählte Anordnung der Palettenbeladeplätze 5 beidseitig der Palettiermaschine 2 sowie durch die unter der Lagenbereitstellungsstation A positionierte Abgabestelle 13 ergibt sich ein Mindestmaß an Fahrstrecken und somit an Zeitbedarf.

Als ein weiterer erfindungsgemäßer Schritt wird die Palettiermaschine 2 mit ihrer Palettentransportbahn 12 in bodennaher Höhe als Transportmittel zum programmgesteuerten Verteilen der Leerpaletten 1b an die Palettenbeladeplätze 5 eingesetzt. Die aus einem an sich bekannten und daher nicht dargestellten Palettenmagazin abgerufenen Paletten gelangen über eine Zulaufrollenbahn 16, die unterhalb der Lagenvorpalettiereinrichtung 6 verläuft, auf die Transportbahn 12 der Palettiermaschine 2, um von dieser zu den Palettenbeladeplätzen 5 verbracht zu werden.

Palettieranlage

Patentansprüche

1. Palettieranlage zum lagenweisen Abstapeln von aus Produktionslinien zugeführten, zu einer Packlage zusammengesetzten
   Packungen unterschiedlicher Produktsorten auf Paletten an jeweils zugeordneten Palettenbeladeplätzen, mit einer Lagenvorpalettiereinrichtung, mit einer dieser nachgeordneten, die
   Packlagen übernehmenden und nach einem vorwählbaren Programmablauf zu ihren jeweiligen Beladeplätzen transportierenden
   Palettiermaschine und mit einem an den Palettenbeladeplätzen
   entlang verfahrbaren Verteilerwagen zur Übernahme und zum Abtransportieren der Vollgutpalette zu einer Abgabestelle, gekennzeichnet durch eine die Funktion des Verteilerwagens übernehmende Palettiermaschine (2) mit einer auf bodennahem Niveau
   angeordneten Palettentransportbahn (12), wobei die Palettiermaschine (2) zum Abtransport der Vollgutpaletten zwischen
   Übernahmestellen vor den Palettenbeladeplätzen (5) und einer
   Abgabestelle (13) programmgesteuert verfahrbar ist.

2. Palettieranlage nach Anspruch 1, dadurch gekennzeichnet, daß
   sich die Abgabestelle (13) unmittelbar an die Lagenvorpalettiereinrichtung (6) anschließt.

3. Palettieranlage nach Anspruch 1 oder 2, dadurch gekennzeichnet, daß die Palettenbeladeplätze (5) beidseitig der Palettiermaschine (2) und zu dieser im rechten Winkel installiert sind.

4. Palettiermaschine nach Anspruch 1 bis 3, dadurch gekennzeichnet, daß die Palettiermaschine (2) Transportmittel zum programmgesteuerten Verteilen von Leerpaletten an die Palettenbeladeplätze (5) ist, wobei die Leerpaletten aus einem Magazin über eine der Palettentransportbahn (12) in der Palettiermaschine (2) vorgeordnete Förderbahn (16) zuführbar sind.

FIG. 1

FIG. 2

0194455